# EUROPÄISCHE PATENTSCHRIFT

(11) **EP 0 528 416 B1**
(45) Veröffentlichungstag und Bekanntmachung des Hinweises auf die Patenterteilung: **12.06.1996**
(21) Anmeldenummer: 92114147.9
(22) Anmeldetag: 19.08.1992
(51) Int. Cl.: C04B 41/50, C04B 35/56

(54) **Siliziumcarbid-Verbundwerkstoff und Verfahren zu seiner Herstellung**
Silicon carbide composite and method for production thereof
Composite de carbure de silicium et son procédé de fabrication

(30) Priorität: 21.08.1991 DE 4127583
(43) Veröffentlichungstag der Anmeldung: 24.02.1993
(73) Patentinhaber: Hoechst CeramTec Aktiengesellschaft, D-95100 Selb (DE)
(72) Erfinder: Heinrich, Jürgen, Dr., W-8672 Selb (DE); Huber, Jürgen, Dr., W-8672 Selb (DE); Schwandner, Barbara, Dr., W-8671 Schönwald (DE)
(74) Vertreter: Hoffmann, Peter, Dipl.-Chem.

(56) Entgegenhaltungen:
- EP-A- 0 372 708
- GB-A- 1 023 155
- US-A- 4 626 516
- US-A- 5 079 195

## Beschreibung

Die Erfindung betrifft Formkörper aus einem Siliziumcarbid-Verbundwerkstoff, bei dem die Hohlräume einer Matrix aus kristallinem Siliziumcarbid durch eine zweite Phase aus einem Schwermetallsilizid ausgefüllt sind.

Siliziuminfiltriertes Siliziumcarbid (SiSiC) ist ein seit langem bekannter keramischer Werkstoff, der sich durch vorteilhafte Eigenschaften, wie hohe Härte, geringer Verschleiß, gute Gleiteigenschaften, hohe Wärmeleitfähigkeit, hohe elektrische Leitfähigkeit, gutes Thermoschockverhalten, Hochtemperaturbeständigkeit, chemische Beständigkeit in sauren und neutralen Medien sowie fehlende Brennschwindung auszeichnet. Daher werden Bauteile aus SiSiC vor allem in der Wärmetechnik (Wärmetauscher, Brennrohre), im Pumpenbau (Gleitringe, Laufräder) und für Bauteile mit hohem mechanischem Verschleiß (Düsen) eingesetzt.

SiSiC wird hergestellt durch Infiltration von flüssigem Silizium in einen Grünkörper aus SiC und Kohlenstoff. Dabei kommt es zur Reaktion zwischen Kohlenstoff und Silizium unter Bildung von weiterem SiC, das die ursprünglich vorhandenen SiC-Körner verbrückt und so die relativ hohe Festigkeit des Werkstoffs verursacht. Eventuell vorhandene Poren werden durch überschüssiges Silizium ausgefüllt, so daß SiSiC ein vollkommen dichter Werkstoff ist. Bei den benötigten Reaktionsbedingungen tritt dabei keine Schwindung auf.

Problematisch wird die Verwendung von SiSiC vor allen in Gegenwart alkalischer Medien, weil dann das metallische, "freie" Silizium herausgelöst wird. Dadurch wird der Werkstoff stark porös, verliert seine guten tribologischen Eigenschaften und erleidet einen drastischen Festigkeitsabfall. Außerdem kann das herausgelöste Silizium in das angreifende Medium gelangen und dabei Schaden verursachen.

Ein anderer Nachteil von SiSiC gegenüber reinem, gesintertem SiC ist die begrenzte Verwendbarkeit bei hohen Temperaturen. Ursache hierfür ist das Aufschmelzen von elementarem Silizium bei ca. 1400°C. Heute ist es jedoch von Interesse, insbesondere Verbrennungsreaktionen in Gegenwart von Luft bei Temperaturen oberhalb 1600°C wegen des geringeren Schadstoffaustoßes durchzuführen.

Insoweit besteht Bedürfnis nach einem verbesserten SiC-Verbundwerkstoff, der eine erhöhte Beständigkeit bei hohen Temperaturen und/oder gegen Korrosion aufweist.

Man hat auch schon versucht, die flüssige Phase Silizium durch ein Metallsilizid mit hohem Schmelzpunkt zu ersetzen. R. P. Messner und Y. Chiang (Ceram. Eng. Sci. Proc. Band 9, (1988) S. 1053) beschreiben das Infiltrieren eines Siliziumcarbid/Graphitpreßlings mit einer Silizium-Molybdän-Schmelze unter Argon-Überdruck. Im Reaktionsprodukt konnten sie kein freies Silizium mehr nachweisen. Die Infiltration führt also zu einem homogenen Werkstoff. Allerdings ist das angewandte Tauchverfahren (R.P. Messner und Y. Chiang, J. Am. Ceram. Soc. 73 p. 1194) bei größeren Bauteilen nur schwer beherrschbar.

W. Schmidt et al. beschreiben Versuche, Preßlinge aus Siliziumcarbid/Graphit mit einer Molybdän/Silizium-Schmelze (cfi/Ber. DGK 67 (1990) S. 245) bzw. mit dem System Titan/Silizium (cfi/Ber. DKG 67 (1990) S. 135) im Vakuum zu infiltrieren. Dabei wurde mit einer Auflagetränkung gearbeitet. Hierbei wird auf den Preßkörper ein Kohlenstoff enthaltender Silizium-Metall-Körper, der Infiltrant, aufgelegt. Der Kohlenstoff im Infiltranten bildet ein Siliziumcarbid-Skelett, was die Infiltration verlangsamen und besser steuerbar machen soll. Das Reaktionsprodukt mit Molybdän zeigte kein homogenes Gefüge. Bereiche mit metallischem Silizium waren feststellbar. Die Biegebruchfestigkeit bei Raumtemperatur wurde gegenüber dem System SiC-Si deutlich abgesenkt. Auch mit Titan waren Bereiche mit metallischem Silizium feststellbar.

In der EP-A-368 517 wird ein Verfahren zur Herstellung eines Verbundkörpers beschrieben, bei dem poröse Grünkörper aus Siliziumcarbid, Kohlenstoff und einem Metallcarbid mit einer Mischung aus geschmolzenem Silizium und dem geschmolzenem Metall infiltriert werden, von dem sich das Metallcarbid ableitet. Erwähnt werden die Carbide von Titan, Zirkon, Hafnium, Molybdän, Niob, Tantal, Wolfram und Vanadin.

Nach dem Verfahren der EP-A-372 708 wird der gleiche Grünkörper mit geschmolzenem Silizium (ohne Metall) infiltriert. Die resultierenden Werkstoffe weisen zusätzlich eine Metallcarbid-Phase auf. Dies läßt eine hohe Sprödigkeit und hohe thermische Spannungen wegen der unterschiedlichen Wärmedehnung der drei festen Phasen erwarten.

Es bestand daher die Aufgabe, die bekannten Infiltrationsverfahren so zu verbessern, daß homogene Körper ohne freie Siliziumphase erhalten werden können.

Es wurde nun ein Verfahren zur Herstellung eines Formkörpers gefunden, der aus einem Siliziumcarbid-Verbundwerkstoff besteht. Dabei wird ein Gemisch bereitet, das Siliziumcarbid-Pulver und Kohlenstoff-Pulver enthält, das Gemisch wird zu einem porösen Formkörper verarbeitet und dieser Formkörper wird im Vakuum mit einem flüssigen homogenen Gemisch, bestehend aus Silizium und mindestens einem Metall, das ausgewählt ist aus der Gruppe Chrom, Molybdän, Wolfram, Hafnium, Zirkon, Vanadin, Mangan, Niob und Tantal, oder einem Gemisch von Silizium und mindestens einem Silizid eines dieser Metalle infiltriert. Das Verfahren ist dadurch gekennzeichnet, daß man den porösen Formkörper mit einer Pulverschüttung, die aus einer Mischung von Silizium und Metall oder Silizium und Metallsilizid, in Kontakt bringt und dann Formkörper und Pulverschüttung im Vakuum bis über den Schmelzpunkt der Schüttung erhitzt.

Die zu silizierenden Formkörper lassen sich, falls erforderlich, auf der ganzen Oberfläche mit einer Pulverschüttung umgeben. Es ist vorteilhaft, nur die eben ausreichende Menge der Pulverschüttung einzusetzen. In diesem Fall müssen keine unreagierten, am Formkörper festhaftenden Überreste entfernt werden.

Vorteilhafterweise beträgt der Anteil an Kohlenstoff im porösen Formkörper 2 bis 25 Gew.-%. Etwas Kohlenstoff ist erforderlich, damit neues Siliziumcarbid gebildet wird. Vorzugsweise wird zum Infiltrieren eine Metall/Siliziumlegierung verwendet, die 35 bis 80 Gew.-% Silizium enthält. Das Silizium wird benötigt, um den freien Kohlenstoff des Formkörpers in Siliziumcarbid zu überführen. Die danach verbleibende Siliziummenge soll eben ausreichen, mit dem Metall im Innern des Formkörpers ein Metallsilizid zu bilden. Falls das Metall leicht Silizide bildet, kann man auch Metallsilizid/Silizium-Mischungen verwenden, die 20 bis 40 Gew.-% freies Silizium enthalten. In diesem Fall wird das Silizium lediglich benötigt, um den Kohlenstoff des grünen Formkörpers in SiC zu überführen. Das Siliziumcarbid-Pulver und Kohlenstoff-Pulver enthaltende Gemisch zur Herstellung des porösen Formkörpers kann auch noch bis zu 20 Gew.-% jenes Metalls enthalten, das als freies Metall oder Metallsilizid Bestandteil der Pulverschüttung ist.

Je nach der Zusammensetzung des gebildeten Silizids, der Porosität des grünen Formkörpers und der Dichte des gebildeten Metallsilizids kann man 100 Gew.-Teile eines porösen Formkörpers mit einem Gemisch aus 30 bis 80 Gew.-Teilen Silizium und 10 bis 100 Gew.-Teilen Metall silizieren. Damit einerseits genug Silizium für die Reaktion mit dem vorhandenen Kohlenstoff zur Verfügung steht und andererseits die verbleibenden Poren vollständig durch das entstehende Metallsilizid ausgefüllt werden können, sind meist 60 bis 130 Gew.-Teile an zur Infiltration verwendeter Pulverschüttung erforderlich. Analog kann man einen porösen Formkörper von 100 Gew.-Teilen mit einem Gemisch von 15 bis 120 Gew.-Teilen Metallsilizid und 5 bis 80 Gew.-Teilen Silizium silizieren.

Beim Silizieren mit dem System Si/Mn wurde überraschenderweise ein homogener Werkstoff erhalten, der nur aus Siliziumcarbid und Mangansilizid bestand. Geringere Restporosität von ca. 200 Vol.-% wurde auf die Volumenkontraktion des Mangansilizids beim Erstarren zurückgeführt. Anschließende Versuche mit den silizidbildenden Metallen Chrom, Hafnium, Molybdän, Niob, Tantal, Titan, Vanadin, Wolfram und Zirkon verliefen ebenfalls erfolgreich. In keinem der so hergestellten Werkstoffe konnte das entsprechende Metallcarbid nachgewiesen werden. In allen Fällen reagierte der Kohlenstoff bevorzugt mit dem Silizium zu Siliziumcarbid.

Um bei den hochschmelzenden Metallen den Silizium-Anteil in der Infiltrationsmischung zu erhöhen und den Schmelzpunkt der Mischung und die Infiltrationstemperatur zu erniedrigen, ist es sinnvoll, einen Teil des silizidbildenden Metalls bereits in das Material des grünen Formkörpers einzuarbeiten.

Eine weitere Möglichkeit zum Einbringen des silizidbildenden Metalls besteht darin, den Kohlenstoff ganz oder teilweise durch das Carbid des entsprechenden Metalls zu ersetzen. Bei Einhaltung stöchiometrischer Mengen (in der Infiltrationsmischung) liegen auch hier im Reaktionsprodukt nur Siliziumcarbid und Metallsilizid vor.

Nach dem erfindungsgemäßen Verfahren lassen sich Formkörper aus einem Siliziumcarbid-Verbundwerkstoff herstellen, bei denen die Hohlräume einer Matrix aus kristallinem Siliziumcarbid durch eine zweite Phase aus Metallsilizid ausgefüllt sind, wobei diese zweite Phase aus mindestens einem Silizid der Elemente Chrom, Wolfram, Hafnium, Zirkon, Vanadin, Mangan, Niob oder Tantal besteht. Weitere Einzelheiten sind aus den Ansprüchen zu entnehmen. Vorzugsweise beträgt der Anteil an kristallinem Siliziumcarbid 80 bis 90 Vol.-%. Bevorzugt besteht die zweite Phase aus Chromdisilizid.

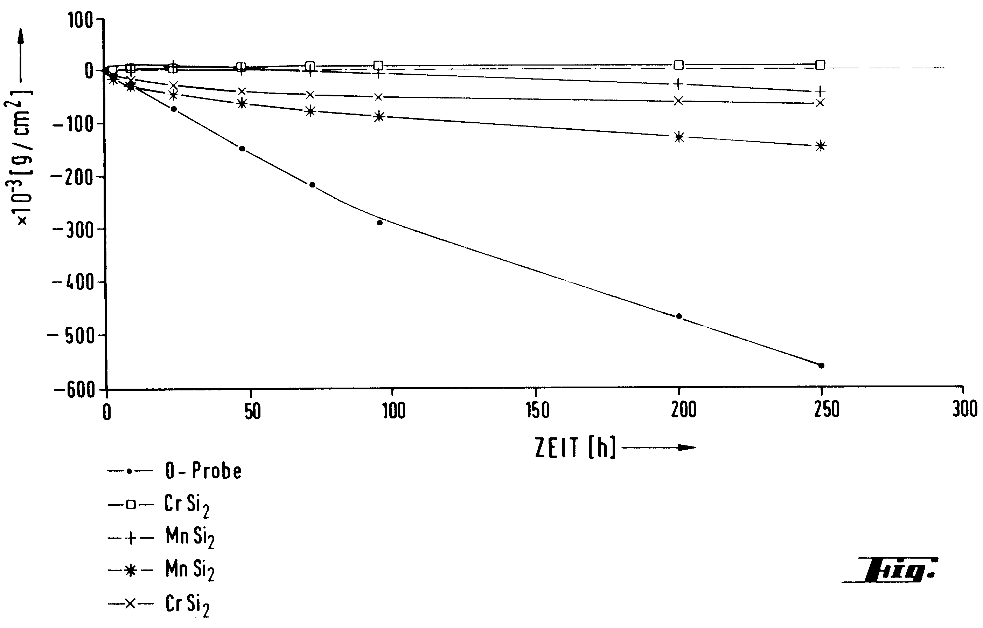

Wie Auslagerungsversuche in 90 gew.-%iger Natronlauge bei 90°C zeigen, wird die Korrosion der erfindungsgemäß hergestellten Werkstoffe gegenüber SiSiC in den meisten Fällen erheblich verringert. Vor allem bei den Systemen CrSi₂/SiC und MoSi₂/SiC wird die Auslaugung fast vollständig unterdrückt. Der nach 250 Stunden Angriffszeit gemessene Gewichtsverlust lag bei diesen Systemen unter 1 %. Er könnte auch auf die Korrosion von Siliziumcarbid zurückzuführen sein, wie entsprechende Gefügeaufnahmen zeigen. Die Ergebnisse der Auslagerungsversuche (oberflächenbezogener Massenverlust in Abhängigkeit der Einwirkzeit) mit diesen Systemen sind in der Figur aufgeführt.

Die zu infiltrierenden Grünkörper aus SiC/Kohlenstoff können nach beliebigen Formgebungsverfahren, z.B. durch Pressen, Extrudieren, Schlickergießen oder Spritzgießen hergestellt werden.

Vorzugsweise hat der eingesetzte Kohlenstoff eine Korngröße unter 20 µm, damit er rasch mit Silizium reagiert. Bevorzugt sind Korngrößen von 0,1 bis 10 µm.

Für das erfindungsgemäße Infiltrieren mit Metallsiliziden können grundsätzlich die gleichen Verfahren angewandt werden, wie für das Infiltrieren mit Silizium. Bei der Auswahl des Verfahrens ist die Geometrie und die Gründichte des zu infiltrierenden Bauteils ausschlaggebend. Bei einem Tiegel wird es sich anbieten, die Infiltrationsmischung direkt in das Bauteil hineinzuschütten. Stäbchen dagegen lassen sich besser infiltrieren, wenn man sie auf Brennhilfsmittel legt, die mit der Infiltrationsmischung gefüllt sind.

Wenn sich das Silizid von einem relativ hochschmelzenden Metall (Schmelzpunkt über 1800°C) ableitet, ist es sinnvoll, die Infiltrationsmischung vor dem Infiltrieren zu homogenisieren. Sonst wird nämlich der Grünkörper mit dem zunächst ausgeschmolzenen Silizium infiltriert, bevor eine homogene Schmelze gebildet wird. Das Homogenisieren geschieht am einfachsten durch das Aufschmelzen einer Mischung beider Komponenten im Vakuum oder unter Schutzgas, Abkühlen und Zerkleinerung der anfallenden Schlacke.

Die nach den erfindungsgemäßen Verfahren herstellbaren Körper (z.B. mit CrSi₂, MoSi₂ und MnSi₂) weisen eine höhere Korrosionsbeständigkeit in alkalischen Medien auf als Körper aus SiSiC. Der mit dem Aufschmelzen von Silizium verbundene Festigkeitsabfall bei ca. 1420°C wird nicht beobachtet. Ein Festigkeitsabfall tritt vielmehr erst beim Schmelzpunkt des Metallsilizids ein. Gegenüber SiSiC zeigen die Formkörper geringere Sprödigkeit und keine Brennschwindung. Vorzugsweise soll die Infiltrationstemperatur mindestens 50°C, insbesondere mindestens 100°C, über dem Schmelzpunkt der Infiltrationsmischung liegen.

Die meisten Silizide liegen als Disilizide vor. Im allgemeinen liegt der Schmelzpunkt der Silizide höher als der von Silizium (1410°C), zum Beispiel bei VSi₂ (1677°C), NbSi₂ (1920°C), MoSi₂ (2020°C), WSi₂ (2164°C) und TaSi₂ (2200°C). Diese Verbindungen sind daher vor allem interessant für den Einsatz bei hohen Temperaturen, wo SiSiC wegen des Ausschmelzens von Silizium nicht mehr verwendet werden kann, aber die guten Gleiteigenschaften, die Wärmeleitfähigkeit oder elektrische Leitfähigkeit von SiC gefragt ist.

Daneben gibt es allerdings auch Disilizide, die bei mit Si vergleichbaren Temperaturen schmelzen, wie z.B. CrSi₂ (1520°C), CrSi₂ (1490°C), TiSi₂ (1480°C) und MnSi₂ (1144°C). Verbundwerkstoffe mit diesen Siliziden sind besonders im Hinblick auf ihre Korrosionseigenschaften oder ihre tribologischen Eigenschaften interessant. Siliziumcarbid selbst zersetzt sich erst bei 2700°C.

Die Disilizide sind vor allem deshalb interessant, weil sie den jeweils höchsten Siliziumanteil aufweisen und die Infiltrationsmischung einen überstöchiometrischen Anteil an Silizium aufweist, der für die Reaktion mit Kohlenstoff benötigt wird.

Die Reaktion des Metalls mit Silizium zu den Siliziden verläuft bei den untersuchten Metallsiliziden jeweils stark exotherm, so daß ein rasches Durchreagieren angenommen werden muß. Bei allen durchgeführten Versuchen genügt jeweils eine Haltezeit von 30 Minuten bei der Infiltrationstemperatur, um Bauteile von 5 mm Wandstärke und einer Höhe von 50 mm vollständig durchzureagieren.

Die Erfindung wird durch die nachfolgenden Beispiele näher erläutert, ohne aber auf die konkret dargestellten Ausführungsformen beschränkt zu sein.

### Beispiel 1

Zunächst wird eine SiC-Schlickergießmasse aus folgenden Komponenten bereitet:

| | |
|---|---|
| SiC-Pulver (1-60 µm): | 63,8 Gew.-% |
| Kohlenstoff : | 9,1 " |
| Organische Additive: | 0,5 " |
| Wasser (deionisiert): | 26,6 " |

Aus dieser Masse wird durch Schlickergießen in eine Gipsform ein grüner Formkörper, z.B. ein Tiegel, hergestellt. Nach dem Trocknen wird der Grünkörper (100 Gewichtsteile) mit einer Silizium/Chrom-Mischung infiltriert. Die Infiltrationsmischung setzt sich zusammen aus 59 Gew.-Teilen Silizium (unter 10 µm) und 27 Gew.-Teilen Chrom (unter 5 µm).

Die Silizium/Chrom-Mischung wird direkt auf den Grünkörper aufgebracht und bei Temperaturen zwischen 1600°C und 1700°C im Vakuum geschmolzen und zur Reaktion gebracht.

Das Reaktionsprodukt besitzt eine Dichte von 3,48 g/cm³ und setzt sich zusammen aus 76,5 Gew.-% SiC und 23,5 Gew.-% CrSi₂. Es besitzt eine Porosität von ca. 1 bis 2 %. Der CrSi₂/SiC-Verbundwerkstoff zeigt in 10 %iger NaOH praktisch keine Korrosion; der Gewichtsverlust nach 250 Stunden in 10 %iger NaOH beträgt bei Raumtemperatur < 5 Gew.-%.

### Beispiel 2

Ein Grünkörper, hergestellt wie in Beispiel 1 wird infiltriert mit einer Mischung aus:

| | |
|---|---|
| Silizium: | 58 Gew.-% (bez. auf Masse des Grünkörpers) |
| Molybdän: | 47 Gew.-% (bez. auf Masse des Grünkörpers) |

Die Infiltrationsmischung wird durch ein vorausgehendes Aufschmelzen bei 2100°C unter Schutzgas homogenisiert und anschließend zerkleinert. Das Silizium/Molybdängemisch wird dann direkt mit dem infiltrierenden Grünkörper in Kontakt gebracht und dann einem Reaktionsbrand bei 2100° - 2200°C im Vakuum unterworfen.

Der entstehende Verbundwerkstoff besitzt eine Dichte von 3,80 g/cm³, die einer Zusammensetzung von 70 Gew.-% SiC und 30 Gew.-% MoSi₂ entspricht. Der Schmelzpunkt von MoSi₂ liegt bei 2020°C, so daß der MoSi₂/SiC-Werkstoff bis zu einer Temperatur von 2000°C eingesetzt werden kann.

Der Gewichtsverlust nach 250-stündiger Auslagerung in 10 %iger NaOH beträgt lediglich 1 Gew.-%.

### Beispiel 3

Die Infiltrationsmischung kann anstelle des silizidbildenden Metalls auch das Silizid selbst enthalten. In diesem Falle kann die bei hochschmelzenden Metallen erforderliche Vorhomogenisierung entfallen. Für die Herstellung eines MoSi₂/SiC-Körpers setzt sich die Infiltrationsmischung dann wie folgt zusammen:

| | |
|---|---|
| Silizium: | 73 Gew.-% (bez. auf die Masse des Grünkörpers) |
| MoSi₂: | 32 Gew.-% (bez. auf die Masse des Grünkörpers) |

### Beispiel 4

Es wird ein Grünkörper mit einem erhöhten Kohlenstoffanteil hergestellt, der sich wie folgt zusammensetzt:

| | |
|---|---|
| - SiC: | 79,5 Gew.-% |
| - Kohlenstoff: | 20.0 Gew.-% |
| - Org. Additive: | 0,5 Gew.-% |

Anschließend wird wie in Beispiel 2) beschrieben mit einer Mischung aus Molybdän und Silizium infiltriert. Durch den gestiegenen Kohlenstoffgehalt muß jedoch auch der Siliziumanteil in der Infiltrationsmischung steigen. Verwendet wurde die folgende Zusammensetzung:

| | |
|---|---|
| - Silicium: | 62 Gew.-% (bez. auf die Masse des Grünkörpers) |
| - Molybdän: | 36 Gew.-% (bez. auf die Masse des Grünkörpers) |

Wegen des höheren Siliziumanteils in der Infiltrationsmischung findet die Infiltration im Vergleich zu Beispiel 2) bei um ca. 200 K tieferen Temperaturen statt, d.h. bereits bei 1900° - 2100°C (im Vakuum).

### Beispiel 5

Eine weitere Möglichkeit die Infiltrationstemperatur zu senken, besteht darin, einen Anteil des silizidbildenden Metalls in den Grünkörper einzubringen. Im Beispiel setzt sich der Grünkörper wie folgt zusammen:

| | |
|---|---|
| - SiC: | 74,4 Gew.-% |
| - Kohlenstoff: | 10,6 Gew.-% |
| - Molybdän: | 15,0 Gew.-% |

Infiltriert wird mit einer Mischung aus:

| | |
|---|---|
| - Silizium: | 56,5 Gew.-% (bez. auf die Masse des Grünkörpers) |
| - Molybdän: | 36,5 Gew.-% (bez. auf die Masse des Grünkörpers) |

Durch die Erhöhung des Si-Anteils kann die Infiltrationstemperatur im Vergleich zu Beispiel 2) um ca. 100 K erniedrigt werden, d.h. es kann bei 2000° - 2100°C im Vakuum infiltriert werden.

## Patentansprüche

1. Formkörper aus einem Siliziumcarbid-Verbundwerkstoff, bei dem die Hohlräume einer Matrix aus kristallinem Siliziumcarbid durch eine zweite Phase aus Metallsilizid ausgefüllt sind, dadurch gekennzeichnet, daß die zweite Phase aus mindestens einem Silizid der Elemente Chrom, Wolfram, Hafnium, Zirkon, Vanadin, Mangan, Niob oder Tantal besteht.

2. Verbundwerkstoff gemäß Anspruch 1, dadurch gekennzeichnet, daß der Anteil an kristallinem Siliziumcarbid 60 bis 90 Vol.-% beträgt.

3. Verbundwerkstoff gemäß Anspruch 1, dadurch gekennzeichnet, daß die zweite Phase aus CrSi₂ besteht.

4. Verfahren zur Herstellung eines Formkörpers aus einem Siliziumcarbid-Verbundwerkstoff, wobei man ein Gemisch bereitet, das Siliziumcarbid-Pulver und Kohlenstoff-Pulver enthält, man das Gemisch zu einem porösen Formkörper verarbeitet und diesen im Vakuum mit einem flüssigen, homogenen Gemisch bestehend aus Silizium und mindestens einem Metall, das ausgewählt ist aus der Gruppe Chrom, Molybdän, Wolfram, Hafnium, Zirkon, Vanadin, Mangan, Niob und Tantal oder einem Gemisch von Silizium und mindestens einem Silizid eines dieser Metalle infiltriert, dadurch gekennzeichnet, daß man den porösen Formkörper mit einer Pulverschüttung, bestehend aus einer Mischung von Silizium und Metall oder Silizium und Metallsilizid, in Kontakt bringt und dann Formkörper und Pulverschüttung im Vakuum bis über den Schmelzpunkt der Schüttung erhitzt.

5. Verfahren gemäß Anspruch 4, dadurch gekennzeichnet, daß der Anteil an Kohlenstoff im porösen Formkörper 2 bis 25 Gew.-% beträgt.

6. Verfahren gemäß Anspruch 4, dadurch gekennzeichnet, daß man zum Infiltrieren eine Metall/Silizium-Legierung verwendet, die 35 - 80 Gew.-% Silizium enthält.

7. Verfahren gemäß Anspruch 4, dadurch gekennzeichnet, daß man zum Infiltrieren eine Metallsilizid/Silizium-Mischung verwendet, die 20 bis 40 Gew.-% freies Silizium enthält.

8. Verfahren nach Anspruch 4, dadurch gekennzeichnet, daß man zur Herstellung des porösen Formkörpers ein Gemisch verformt, das neben Siliziumcarbid-Pulver und Kohlenstoffpulver noch bis zu 20 Gew.-% des Metalls enthält, das als freies Metall oder Metallsilizid Bestandteil der Pulverschüttung ist.

9. Verfahren nach Anspruch 4, dadurch gekennzeichnet, daß man einen porösen Formkörper von 100 Gewichtsteilen mit einem Gemisch aus 30 bis 80 Gewichtsteilen Silizium und 10 bis 100 Gewichtsteilen Metall siliziert.

10. Verfahren nach Anspruch 4, dadurch gekennzeichnet, daß man einen porösen Formkörper von 100 Gewichtsteilen mit einem Gemisch von 15 bis 120 Gewichtsteilen Metallsilizid und 50 bis 80 Gewichtsteilen Silizium siliziert.

11. Verfahren gemäß Anspruch 4, dadurch gekennzeichnet, daß die Pulverschüttung frei ist von elementarem Kohlenstoff.

12. Verfahren gemäß Anspruch 5, dadurch gekennzeichnet, daß man den Kohlenstoff ganz oder teilweise durch ein Carbid des Metalles ersetzt, das in freier Form oder in Form des Metallsilizids Bestandteil der Pulverschüttung ist.

## Claims

1. A molding composed of a composite silicon carbide material in which the cavities of a matrix composed of crystalline silicon carbide are filled with a second phase composed of a metal silicide, wherein the second phase is composed of at least one silicide of the elements chromium, tungsten, hafnium, zirconium, vanadium, manganese, niobium or tantalum.

2. A composite material as claimed in claim 1, wherein the proportion of crystalline silicon carbide is 60 to 90 % by volume.

3. A composite material as claimed in claim 1, wherein the second phase is composed of CrSi₂.

4. A process for producing a molding composed of a composite silicon carbide material, in which a mixture is prepared which contains silicon carbide powder and carbon powder, the mixture is processed to produce a porous molding and said molding is infiltrated in vacuo with a liquid homogeneous mixture composed of silicon and at least one metal selected from the group comprising chromium, molybdenum, tungsten, hafnium, zirconium, vanadium, manganese, niobium and tantalum or a mixture of silicon and at least one silicide of one of said metals, which process comprises bringing the porous molding into contact with a bed of powder composed of a mixture of silicon and metal or silicon and metal silicide and then heating the molding and the bed of powder in vacuo to a temperature above the melting point of the bed.

5. The process as claimed in claim 4, wherein the proportion of carbon in the porous molding is 2 to 25 % by weight.

6. The process as claimed in claim 4, wherein a metal/silicon alloy containing 35 - 80 % by weight of silicon is used for infiltration.

7. The process as claimed in claim 4, wherein a metal silicide/silicon mixture containing 20 to 40 % by weight of free silicon is used for infiltration.

8. The process as claimed in claim 4, wherein a mixture containing, in addition to silicon carbide powder and carbon powder, also up to 20 % by weight of the metal which is a component of the bed of powder as free metal or metal silicide is molded to produce the porous molding.

9. The process as claimed in claim 4, wherein a porous molding of 100 parts by weight is siliconized with a mixture composed of 30 to 80 parts by weight of silicon and 10 to 100 parts by weight of metal.

10. The process as claimed in claim 4, wherein a porous molding of 100 parts by weight is siliconized with a mixture of 15 to 120 parts by weight of metal silicide and 50 to 80 parts by weight of silicon.

11. The process as claimed in claim 4, wherein the bed of powder is free of elemental carbon.

12. The process as claimed in claim 5, wherein the carbon is completely or partially replaced by a carbide of the metal which is a component of the bed of powder in free form or in the form of the metal silicide.

## Revendications

1. Corps façonné en un matériau composite à base de carbure de silicium dans lequel les creux d'une matrice en carbure de silicium cristallin sont remplis d'une deuxième phase en siliciure de métal, caractérisé en ce que la deuxième phase se compose d'au moins d'un siliciure des éléments chrome, tungstène, hafnium, zirconium, vanadium, manganèse, niobium ou tantale.

2. Matériau composite selon la revendication 1, caractérisé en ce que le taux en carbure de silicium cristallin est de 60 à 90 % en volume.

3. Matériau composite selon la revendication 1, caractérisé en ce que la deuxième phase se compose de CrSi₂.

4. Procédé pour la préparation d'un corps façonné en un matériau composite à base de carbure de silicium en préparant un mélange qui contient de la poudre de carbure de silicium et de la poudre de carbone, en transformant le mélange en un corps façonné poreux et en infiltrant celui-ci, sous vide, par un mélange homogène liquide composé de silicium et d'au moins un métal pris dans le groupe comportant le chrome, le molybdène, le tungstène, l'hafnium, le zirconium, le vanadium, le manganèse, le niobium et le tantale ou un mélange de silicium et d'au moins un siliciure d'un de ces métaux, caractérisé en ce que l'on met en contact le corps façonné poreux avec une charge pulvérulente composée d'un mélange de silicium et de métal ou de silicium et de siliciure de métal, et ensuite on chauffe le corps façonné et la charge pulvérulente sous vide jusqu'à une température supérieure au point de fusion de la charge pulvérulente.

5. Procédé selon la revendication 4, caractérisé en ce que le taux en carbone dans le corps façonné poreux est de 2 à 25 % en poids.

6. Procédé selon la revendication 4, caractérisé en ce que l'on utilise pour l'infiltration un alliage de métal/silicium qui contient de 35 à 80 % en poids de silicium.

7. Procédé selon la revendication 4, caractérisé en ce que l'on utilise pour l'infiltration un mélange de siliciure de métal/silicium, qui contient de 20 à 40 % en poids de silicium libre.

8. Procédé selon la revendication 4, caractérisé en ce que l'on façonne pour la fabrication d'un corps façonné poreux un mélange qui contient outre la poudre de carbure de silicium et la poudre de carbone encore jusqu'à 20 % en poids du métal qui est présent sous forme de constituant métallique libre ou de siliciure de métal de la charge pulvérulente.

9. Procédé selon la revendication 4, caractérisé en ce que l'on silicie un corps façonné poreux, représentant 100 parties en poids, par un mélange composé de 30 à 80 parties en poids de silicium et de 10 à 100 parties en poids de métal.

10. Procédé selon la revendication 4, caractérisé en ce que l'on silicie un corps façonné poreux, représentant 100 parties en poids, par un mélange de 15 à 120 parties en poids de siliciure de métal et de 50 à 80 parties en poids de silicium.

11. Procédé selon la revendication 4, caractérisé en ce que la charge pulvérulente est exempte de carbone élémentaire.

12. Procédé selon la revendication 5, caractérisé en ce que l'on remplace entièrement ou partiellement le carbone par un carbure du métal qui est présent sous forme libre ou sous forme de siliciure de métal dans la charge pulvérulente.
